Europäisches Patentamt

(19) **European Patent Office**

**Office européen des brevets**

(11) Veröffentlichungsnummer: **0 016 987**
**B1**

(12) # EUROPÄISCHE PATENTSCHRIFT

(45) Veröffentlichungstag der Patentschrift:
**07.07.82**

(51) Int. Cl.³: **C 01 B 17/90**

(21) Anmeldenummer: **80101096.8**

(22) Anmeldetag: **05.03.80**

(54) **Verfahren zum Konzentrieren und Reinigen von Schwefelsäure.**

(30) Priorität: **08.03.79 DE 2909029**

(43) Veröffentlichungstag der Anmeldung:
**15.10.80 Patentblatt 80/21**

(45) Bekanntmachung des Hinweises auf die Patenterteilung:
**07.07.82 Patentblatt 82/27**

(84) Benannte Vertragsstaaten:
**CH FR GB SE**

(56) Entgegenhaltungen:
**DE-A-2 360 706**
**DE-B-1 939 818**
**DE-B-2 242 055**
**DE-C-972 412**
**DE-C-1 143 492**

(73) Patentinhaber: **Schott Glaswerke, Hattenbergstrasse 10, D-6500 Mainz (DE)**

(72) Erfinder: **Gericke, Dietrich, Schulstrasse 68, D-6500 Mainz-Gonsenheim (DE)**
Erfinder: **Frankenberger, Siegfried, Hans-Böckler-Strasse 17, D-6093 Försheim (DE)**
Erfinder: **Stark, Adolf, Scheffelstrasse 7, D-6500 Mainz (DE)**

(74) Vertreter: **Rasper, Joachim, Dr., Bierstadter Höhe 22, D-6200 Wiesbaden (DE)**

# Verfahren zum Konzentrieren und Reinigen von Schwefelsäure

Die Erfindung betrifft ein neuartiges Verfahren zum Konzentrieren und Reinigen von Schwefelsäure.

Unter dem Aspekt zu verringernder Umweltbelastung gewinnt das Rezirkulieren von Schwefelsäure mehr und mehr an Bedeutung. Dadurch wird die Aufgabe gestellt, verdünnte und verschmutzte Abfallschwefelsäuren in einen Zustand zurückzuversetzen, den man als «technisch rein» bezeichnet. Zum Erreichen dieses Zustandes muss die Säure auf 96 bis 98 Gew.-% $H_2SO_4$ rückkonzentriert, müssen organische Verunreinigungen entfernt und anorganische Verunreinigungen bis auf einen Gehalt entsprechend ihrer Löslichkeit reduziert werden.

Weiterhin wird angestrebt, dass der Reinigungsprozess zum Entfernen der organischen Verunreinigungen nicht etwa substanzspezifisch arbeitet, sondern universell anwendbar ist, die Abfallsäuren somit unabhängig von ihrer Herkunft aufgearbeitet werden können. Gleichfalls soll durch diesen Prozess möglichst keine zusätzliche Umweltbelastung verursacht werden.

Schliesslich soll der Gesamtprozess wirtschaftlich vorteilhaft sein, was im Idealfall bedeutet, dass rezirkulierte Schwefelsäure ebenso teuer ist wie der Einsatz von frischer Schwefelsäure, einschliesslich der damit verbundenen notwendigen Aufarbeitungskosten (wie z.B. Neutralisation).

Kostenberechnungen ergeben, dass sich dieses Ziel nur erreichen lässt, wenn Konzentrierprozess und Reinigungsprozess verfahrensmässig voneinander getrennt werden.

Bei dem Konzentrierprozess werden die Kosten massgeblich durch die erforderliche Heizenergie bestimmt, wohingegen der Reinigungsprozess vor allem durch Anlage- und Wartungskosten belastet wird.

Konzentrier-Verfahren für Schwefelsäure sind in grosser Zahl bekannt und beschrieben. Als Beispiel sei auf die jüngst erschienene DE-B2-22 42 055 verwiesen. Bis nahe 90% $H_2SO_4$ lassen sich grundsätzlich alle üblichen Verdampfungssysteme verwenden (Kessel, Naturumlauf-, Zwangsumlauf-, Film-Verdampfer), sofern Konstruktion, Werkstoffauswahl und Betriebstemperatur entsprechend gewählt werden. Auch Tauchbrennersysteme werden angewandt.

Für das Konzentrieren über 90% hinaus gibt es nur noch zwei Möglichkeiten:

1. Verdampfen unter Normaldruck bei Temperaturen bis 330°C, wobei als Heizmedium praktisch nur noch Rauchgas in Frage kommt, oder

2. Verdampfen unter Vakuum bis herab auf 5 mbar absolut, wobei die Temperaturen auf 160°C erniedrigt werden können und somit üblicher Heizdampf (von z.B. 16 bar Druck) verwendet werden kann. Reinigungsverfahren für Schwefelsäure (womit hier das Befreien von organischen Verunreinigungen gemeint ist) sind in geringerer Anzahl bekannt.

Nach dem heutigen Stand des Wissens gibt es nur ein Verfahren, das nahezu universell anwendbar ist. Das ist die Selbstreinigung der Schwefelsäure durch Oxidation der organischen Verunreinigungen bei Konzentrationen oberhalb 96% $H_2SO_4$ und Temperaturen zwischen 270 und 330°C.

Dieses Prinzip wird bisher nur im Pauling-Kessel angewandt, wo es in Kombination mit einem Konzentrieren der Säure stattfindet. Bedingt durch Korrosion und Verschleiss sind die Wartungs- und Instandhaltungskosten hoch.

Reinigungsverfahren, bei denen Oxidationsmittel zugesetzt werden (Salpetersäure, Wasserstoffperoxid u.ä.), sind nicht universell verwendbar und ausserdem durch Abgasprobleme ($HNO_3$) oder Rohstoffkosten ($H_2O_2$) unwirtschaftlich.

Auch die direkte Elektrolyse oxidiert unvollständig und ist wegen Wasserstoffbildung und Elektrodenabtrag (Platin) nicht durchführbar.

Ziel der vorliegenden Erfindung ist ein neues Verfahren zum Konzentrieren und Reinigen von Schwefelsäure, das die vorstehend geschilderten Nachteile der bisher bekanntgewordenen Verfahren nicht aufweist. Dieses Ziel wird mit einem Verfahren gemäss den Pantentansprüchen erreicht.

Von dem eingangs erwähnten Verfahren gemäss DE-B2-22 42 055 unterscheidet sich das neue Verfahren im wesentlichen dadurch, dass die starke Erhitzung der Schwefelsäure im zweiten Verfahrensschritt durch elektrische Heizelemente erfolgt, die nicht von aussen durch die Kesselwand heizen, sondern im Kessel selbst angeordnet sind, wo sie vollkommen in die Schwefelsäure eintauchen.

Das erfindungsgemässe Verfahren wird im nachfolgenden ausführlich beschrieben.

Der Gesamtprozess:

Abfallschwefelsäuren fallen überwiegend im Konzentrationsbereich zwischen 20 und 70 Gew.-% $H_2SO_4$ an. Das Konzentrieren verdünnter Säure, besonders unter 50% $H_2SO_4$, ist ein reines Energiekosten-Problem.

Der erfindungsgemässe Prozess verwendet vorzugsweise Umlaufverdampfersysteme zum Konzentrieren der Schwefelsäure, welche die Möglichkeit der Nutzbarmachung der Brüdenenergie bieten. Durch die hohen Wärmeübergangszahlen an den Heizflächen dieser Verdampfer erhält man hohe spezifische Flächenleistungen. Durch die Eindampfung unter Vakuum, wobei ausschliesslich mit Sattdampf beheizt wird, steigt die Säurekonzentration bis auf mindestens 90%, vorzugsweise etwa 94% $H_2SO_4$.

Erst danach wird die Säure in einen «Reinigungskessel» übergeführt und unter Normaldruck bis auf mindestens 280°C, höchstens 330°C erwärmt, wobei die organischen Verunreinigungen zerstört werden.

Das Vorteilhafte dieses Vorgehens erkennt man an einem Vergleich der erforderlichen Wärmeleistung eines Pauling-Kessels, der mit 70%iger Schwefelsäure kontinuierlich beschickt wird und diese auf 96% H₂SO₄ konzentrieren und gleichzeitig reinigen muss, mit einem Kessel, der nach dem hier beschriebenem Prinzip kaum noch konzentrieren, sondern fast nur noch reinigen muss.

Pro Tonne 96%iger Schwefelsäure sind im ersten Fall 371 kg Wasser, im zweiten Fall nur noch 21 kg Wasser zu verdampfen. Diese stark verringerte thermische Leistung des Reinigungskessels erlaubt den Einsatz bisher nicht verwendbarer Werkstoffe und Heizsysteme, was den grössten Vorteil des erfindungsgemässen Verfahrens darstellt.

Die Einzelprozesse:
Der Konzentrier-Prozess:
Der Konzentrier-Prozess wird mit Umlauf-Verdampfern durchgeführt und ist ggf. mehrstufig konzipiert. Es werden überwiegend Zwangsumlaufverdampfer verwendet, die den Vorteil bieten, dass die Wärmedurchgangszahl des Heizers (dampfbeheizt) — im Gegensatz zum Natur-Umlaufverdampfer — nicht von der Temperaturdifferenz zwischen siedender Säure und Kondensationstemperatur des Heizdampfes abhängt. Diese Tatsache ist dann wichtig, wenn zur Energieeinsparung zwei Verdampferstufen mit Brüdenausnutzung betrieben werden.

Je nach der Endkonzentration einer Stufe wird das Verdampfersystem unter Normaldruck oder Vakuum betrieben, wobei der Betriebsdruck so gewählt wird, dass die Siedetemperatur zwischen 120 und 160C liegt. Bei Systemen mit Brüdenausnutzung allerdings muss die Siedetemperatur im Sekundärsystem möglichst unter 80°C liegen, um noch ausreichende Temperaturdifferenzen zwischen Heizmedium und Säure zur Verfügung zu haben.

Zum Höherkonzentrieren auf über 90% H₂SO₄ ändern sich einige Details an den Verdampfern:
- Der Betriebsdruck wird bis auf ca. 10-20 mbar absolut gesenkt. Dies gestattet das Erreichen einer H₂SO₄-Konzentration von ca. 94% bei Siedetemperaturen von maximal 170°C. Damit ist die Verwendung von 16 bar Heizdampf ($t_{KOND.}$ = 200°C) noch gut möglich.
- Zum Kondensieren der Brüden (Kondensationstemperatur etwa 8°C) wird entweder direkt mit Kaltwasser von 0°C gearbeitet oder mit einem Dampfstrahler auf ca. 8 kPa (60 Torr) vorverdichtet.
- Zum Vermindern des H₂SO₄-Gehaltes in den Brüden wird eine Rektifikation mit der eingespeisten Dünnsäure durchgeführt.

Je nach Erfordernis kann der Aufarbeitungs-Prozess mit dieser Säure-Konzentration abgebrochen oder durch Überführung der Säure in die Reinigungsstufe fortgesetzt werden.

Der Reinigungs-Prozess:
Der Reinigungs-Prozess wird in an sich bekannter Weise durchgeführt, indem die vorkonzentrierte Säure auf hohe Temperaturen (oberhalb 270 bis 330°C) erwärmt wird, wobei die organischen Verunreinigungen oxidiert werden.

Aus der Tatsache jedoch, dass die Säure auf etwa 94% H₂SO₄ vorkonzentriert ist, resultieren eine Reihe bemerkenswerter Vorteile:
- Der Energiebedarf zum Reinigen beträgt nur ca. 120 kW pro Tonne Schwefelsäure (96% H₂SO₄), bedingt durch die Vorkonzentrierung.
- Dieser relativ kleine Energiebedarf macht die Verwendung von elektrischem Strom als Energieträger vorteilhaft. Damit kommt man weg von der bisherigen Rauchgasbeheizung mit dem ganzen feuerungstechnischen Aufwand.
- Die Verwendung von elektrischem Strom macht die Wärmezuführung unmittelbar in die Säure möglich durch Verwendung von z.B. Infrarot-Strahlern, die mittels Schutzrohren (aus Quarz-Glas) in der Säure angeordnet werden.
- Die Verwendung derartiger Strahler wiederum bringt es mit sich, dass die Wärme nicht mehr durch die Kesselwand hindurch auf die Säure übertragen werden muss; dadurch verringern sich erheblich gegenüber dem herkömmlichen Prozess Wandtemperatur und das Temperaturgefälle quer zur Wand. Dies wirkt sich günstig auf das Korrosionsverhalten verwenweter Standard-Guss-Werkstoffe aus.
- Bei Beheizung nach dem Strahler-Prinzip kann jedoch auch Stahl-Email als Kesselwerkstoff verwendet werden, da das Temperaturniveau ohne weiteres ertragen wird, wenn keine Temperaturdifferenzen in der Wand auftreten — was hier der Fall ist.

Damit ist das Problem der Kesselkorrosion grundsätzlich gelöst und der Hauptnachteil der Hochtemperatur-Reinigung, die extrem hohen Instandhaltungskosten der Anlage, beseitigt.

Durch die Kombination von Konzentrierstufen und Reinigungsstufe in der vorstehend beschriebenen Weise, sowie durch die Verwendung besonders säurebeständiger Werkstoffe (Glas, Glasemail, Tantal, Graphit, PTFE usw.) zum Bau der Anlage wird die maximal mögliche Reduzierung der Betriebs- und Unterhaltungskosten erreicht.

Gleichzeitig werden die Nachteile, die man bisher unter dem Stichwort «Säurebetrieb» zusammenfasste, beseitigt.

Dadurch wird ein Regenerieren von Schwefelsäure an vielen Stellen ökonomisch attraktiv unter Bedingungen, die denen eines sauberen Chemie-Betriebs entsprechen.

**Patentansprüche**

1. Verfahren zum Konzentrieren und Reinigen von Schwefelsäure in zwei Verfahrensschritten, wobei im ersten Verfahrensschritt die aufzuarbeitende Schwefelsäure in ggf. mehrstufiger Arbeitsweise unter Beheizung mit Sattdampf auf mindestens 90% konzentriert wird, dadurch ge-

kennzeichnet, dass spätestens in der letzten Verfahrensstufe unter einem Druck von 10-20 mbar abs. gearbeitet wird, und dass im zweiten Verfahrensschritt die im ersten Verfahrensschritt vorbehandelte Schwefelsäure in einem anderen Behälter unter Normaldruck oder höherem Druck bei Temperaturen von mindestens 280°C unter Anwendung von elektrischen Heizelementen auf höchstens 98 Gew.-% weiterkonzentriert wird.

2. Verfahren nach Anspruch 1, dadurch gekennzeichnet, dass der erste Verfahrensschritt in einem Umlaufverdampfer durchgeführt wird.

3. Verfahren nach Anspruch 2, dadurch gekennzeichnet, dass der erste Verfahrensschritt unter Zwangsumlauf durchgeführt wird.

4. Verfahren nach einem der Ansprüche 1 bis 3, dadurch gekennzeichnet, dass in der ersten Verfahrensstufe mit Brüdenausnützung gearbeitet wird.

5. Verfahren nach einem der Ansprüche 1 bis 4, dadurch gekennzeichnet, dass der zweite Verfahrensschritt in einem Kessel durchgeführt wird.

6. Verfahren nach einem der Ansprüche 1 bis 5, dadurch gekennzeichnet, dass als elektrische Heizelemente Infrarotstrahler verwendet werden, die in die Säure eingetaucht werden.

7. Verfahren nach Anspruch 5, dadurch gekennzeichnet, dass als Kessel solche aus Stahl-Email verwendet werden.

**Revendications**

1. Procédé pour concentrer et purifier de l'acide sulfurique en deux étapes opératoires, l'acide sulfurique à traiter étant concentré à au moins 90% dans la première étape avec chauffage par de la vapeur saturée selon un mode opératoire comportant éventuellement plusieurs stades, procédé caractérisé en ce qu'on opère, au plus tard dans le dernier stade, sous une pression absolue de 10 à 20 mbar, et en ce que l'acide sulfurique prétraité dans la première étape est concentré plus avant dans la seconde étape, à au plus 98% ei poids, dans un autre récipient, sous la pression normale ou sous une pression plus élevée, à des températures d'au moins 280°C, à l'aide d'éléments chauffants électriques.

2. Procédé selon la revendication 1 caractérisé en ce que la première étape opératoire est effectuée dans un évaporateur à circulation.

3. Procédé selon la revendication 2 caractérisé en ce que la première étape opératoire est effectuée avec circulation forcée.

4. Procédé selon l'une quelconque des revendications 1 à 3, caractérisé en ce qu'on utilise, dans la première étape opératoire, des vapeurs chaudes d'échappement.

5. Procédé selon l'une quelconque des revendications 1 à 4, caractérisé en ce qu'on effectue la seconde étape opératoire dans une chaudière.

6. Procédé selon l'une quelconque des revendications 1 à 5, caractérisé en ce qu'on utilise, comme éléments chauffants électriques, des émetteurs d'infrarouge qui sont immergés dans l'acide.

7. Procédé selon la revendication 5, caractérisé en ce qu'on utilise, comme chaudière, une chaudière en acier émaillé.

**Claims**

1. A process for the concentration and purification of sulphuric acid in two process steps, wherein, in the first process step, the sulphuric acid to be treated is concentrated to at least 90%, if necessary in a multi-stage procedure, by heating with saturated steam or vapour characterised in that at the latest during the last process stage, a pressure of 10-20 mbar absolute is employed and in that in the second process step, the sulphuric acid which has been pretreated in the first process step is further concentrated to at most 98% by weight in a different vessel at normal pressure or at higher pressure and at temperatures of at least 280°C by use of electric heater elements.

2. A method according to claim 1, characterised in that the first process step is performed in a circulation evaporator.

3. A method according to claim 2, characterised in that the first process step is performed under forced circulation.

4. A method according to one of claims 1 to 3, characterised in that the first process stage is operated by utilisation of vapours.

5. A method according to one of claims 1 to 4, characterised in that the second process step is performed in a boiler.

6. A method according to one of claims 1 to

7. A method according to claim 5, characterments, infrared radiant elements are used which are immersed in the acid.

7. A method according to claim 5, characteised in that the boilers are of enamelled steel.